# EUROPÄISCHE PATENTSCHRIFT

(11) **EP 2 184 337 B1**
(45) Veröffentlichungstag und Bekanntmachung des Hinweises auf die Patenterteilung: **28.03.2018**
(21) Anmeldenummer: 09169436.4
(22) Anmeldetag: 04.09.2009
(51) Int. Cl.: C10L 11/06, C10L 11/04, C10L 5/44

(54) **HOLZFASER-FORMKÖRPER ALS ZÜNDHILFE**
WOOD FIBRE FORM BODY AS IGNITION AID
CORPS DE FORMAGE EN FIBRES DE BOIS COMME AIDE À L'ALLUMAGE

(30) Priorität: 09.12.2008 DE 202008016262 U; 31.10.2008 DE 202008014475 U
(43) Veröffentlichungstag der Anmeldung: 12.05.2010
(73) Patentinhaber: Heumüller, Jürgen, 96160 Geiselwind-Wasserberndorf (DE)
(72) Erfinder: Heumüller, Jürgen, 96160 Geiselwind-Wasserberndorf (DE)
(74) Vertreter: Kruspig, Volkmar

(56) Entgegenhaltungen:
- WO-A1-2005/024305
- BE-A- 433 836
- CH-A- 104 046
- CH-A5- 697 091
- DE-C- 846 390
- DE-U1-202005 015 446
- US-A- 864 021
- US-A- 2 222 250

## Beschreibung

Die Erfindung betrifft einen Holzfaser-Formkörper als Zündhilfe mit zusätzlichem, durch Tauchen oder Tränken bewirkten Brennstoffgehalt, wobei eine Vielzahl von Holzfasern, insbesondere Holzwolle, kompaktiert den Formkörper bilden, gemäß Oberbegriff des Anspruchs 1.

Aus der DE 881 337 ist ein Herstellungsverfahren für einen Feueranzünder vorbekannt, wobei gemäß dem dortigen Verfahren Holzwolle in eine erhitzte flüssige Masse getaucht oder in dieser getränkt wird, wobei die flüssige Masse als zusätzlicher Brennstoff dient und Paraffin sein kann.

Die Patentfamilie DE 102 07 949 A1 / EP 1 338 640 A1 offenbart einen Feueranzünder aus Holzwolle, insbesondere zum Anzünden eines Holz- oder Kohlefeuers, wobei der Feueranzünder mindestens einen Formkörper aus Holzwolle aufweist. Der vorgestellte Feueranzünder geht von einem Formkörper aus, der eine Massendichte im Bereich von 0,02 g/cm³ bis 0,15 g/cm³ besitzt und bei dem Holzspäne zum Einsatz kommen, die eine Breite im Bereich von 1,0 mm bis 6 mm und eine Dicke im Bereich von 0,1 mm bis 0,5 mm besitzen. Der Formkörper nach DE 102 07 949 A1 kann eine Zylindergestalt aufweisen.

Aus der DE 1 765 014 ist ein lockerer Formkörper bekannt, der als Feueranzünder ausgebildet ist und welcher im Wesentlichen aus an Holzfasern gebundenem Öl besteht. Ergänzend kann der lockere Formkörper als Zusatz Kalisalpeter aufweisen.

Die Anzündhilfe für feste Brennstoffe nach DE 102 27 750 A1 ist als ein mit Paraffin getränkter naturbelassener Holzwolle-Seilabschnitt mit einer definierten Restfeuchte ausgebildet, wobei das Paraffin einen festen, wachsartigen Paraffinkern bildet. Das Tränken mit dem vorerwähnten Paraffin erfolgt im Tauchverfahren unter Beachtung einer vorgegebenen Tauchzeit und bei Einhalten eines Abkühlprozesses. Nach dem Abkühlen befindet sich der Holzwolle-Seilabschnitt in einem erstarrten Zustand und kann mittels einer Säge vereinzelt werden.

US 864 021 A offenbart eine Feueranzündanordnung, bei welcher ein dünner Träger in Form einer Furnierplatte vorgesehen ist, der abschnittsweise mit Holzwolle bedeckt ist.

Es hat sich gezeigt, dass die vorbekannten Anzündhilfen in Form von kompaktierten Holzwollekörpern und versehen mit geeigneten Brennmitteln zwar eine ausreichende Brenndauer ermöglichen, die ausreicht, um z.B. größere Holzscheite in Brand zu setzen, jedoch gestaltet sich das Anzünden der Zündhilfe selbst sehr schwierig. Um die Anzündeigenschaften zu verbessern, ist es beispielsweise aus der DE 295 17 488 U1 vorbekannt, ein Holz-Zündhilfe-Paket mit einer Lunte zu versehen, die aus der Oberfläche des Zündhilfe-Pakets hervorsteht.

Aber auch hier besteht die Gefahr, dass zwar die Lunte abbrennt, jedoch die Holzbestandteile des Formkörpers selbst nicht zu brennen beginnen.

Aus dem Vorgenannten ist es daher Aufgabe der Erfindung, einen weiterentwickelten Formkörper als Zündhilfe mit zusätzlichem Brennstoffgehalt anzugeben, welcher über eine ausreichende Brenndauer verfügt und der in einfacher Weise mit üblichen Zündmitteln in Brand gesetzt werden kann.

Die Lösung der Aufgabe der Erfindung erfolgt durch einen, insbesondere zylindrischen; Holzfaser- oder Holzwolle-Formkörper als Zündhilfe gemäß der Merkmalskombination des Anspruchs 1, wobei die Unteransprüche mindestens zweckmäßige Ausgestaltungen und Weiterbildungen umfassen.

Es wird demnach von einem bevorzugt, jedoch nicht ausschließlich zylindrischen Holzwolle-Formkörper als Zündhilfe mit zusätzlichem, durch Tauchen oder Tränken bewirkten Brennstoffgehalt ausgegangen, wobei eine Vielzahl von Holzfasern oder ein Holzwolle-Holzspan-Gemisch kompaktiert den Formkörper bilden.

Erfindungsgemäß weist der Formkörper eine mehrlagige, Wickel- oder Rollstruktur auf, welche eine Schichtenfolge umfasst, die radial beabstandet um die Formkörper-, insbesondere Zylinderlängsachse verläuft.

In Ausgestaltung der Erfindung nimmt der Radius der Schichtenfolge vom Zylinderkern nach außen, zum Zylindermantel hin, stetig zu.

Jede Lage der Schichtenfolge besteht aus wirr orientierten Holzfasern derart, dass die Einzellagen untereinander in haftender Verbindung stehen, so dass die gewünschte Stabilität des Formkörpers, auch in Verbindung mit dem zusätzlichen Brennstoffgehalt, erhalten bleibt.

In erfindungsgemäßer Ausgestaltung ist mindestens die Grund- oder die Deckfläche des Zylinderkörpers als Schrägschnitt ausgebildet.

Der Schrägschnittwinkel bezogen auf die Zylinderlängsachse liegt im Bereich zwischen im Wesentlichen 30° und im Wesentlichen 60°, bevorzugt im Bereich zwischen 35° und 55°.

Weiterhin ausgestaltend besteht die Möglichkeit, die Schrägschnittfläche mit einem Zündmittel zu versehen, dieses Zündmittel kann beispielsweise durch Beschichten aufgebracht sein.

Ebenfalls liegt es im Sinne der Erfindung, sowohl die Grund- als auch die Deckfläche des Zylinderkörpers als Schrägfläche auszubilden. Die Schrägfläche mit ihren quasi spitz zulaufenden Enden dient nun als bevorzugte Anzündstelle, wobei dann eine gleichmäßige Flammenausbildung über den gesamten Zylinderkörper hin eintritt. Der Brennvorgang der Zündhilfe erfolgt stetig unter gleichmäßiger Hitzeentwicklung, so dass Holzscheite oder dergleichen Brennstoffe sicher und schnell angezündet werden können.

Der Schrägschnitt ermöglicht ein sicheres Festhalten und einen größeren Abstand zwischen Hand und Anzündhilfe.

Die eingesetzten Holzwollfasern des erfindungsgemäßen Formkörpers besitzen eine Breite von im Wesentlichen 0,5 mm bis 3,5 mm, bevorzugt 1,5 mm bis 3,0 mm.

Der erfindungsgemäße Formkörper kann auch aus Hobelspänen durch Verpressen hergestellt werden, wobei bei der Verwendung von Hobelspänen die vorstehend genannten Faserabmessungen abweichen können.

Die Verteilung des zusätzlichen Brennstoffs nimmt bei einer Ausgestaltung vom Zylinderkern zum Zylindermantel hin zu.

Die Herstellung des Holzwolle-Formkörpers erfolgt durch eine Anordnung mehrerer Form-Presswalzen. Die Form-Presswalzen führen eine zueinander gerichtete Rotationsbewegung aus. In einen Walzenspalt wird eine vorgegebene Menge von Holzwollfasern aufgegeben. Die Holzwollfasermenge wird in den Walzenspalt eingezogen und dort verdichtet. Durch die Ausführung der Walzenanordnung ergibt sich eine Wickel- bzw. Rolllagenstruktur des Formkörpers. Die Festigkeit und der Formkörperverbund der so hergestellten Produkte ist im Vergleich zum Stand der Technik wesentlich günstiger, da sich kein leicht aufdrehbares Spiralgebilde ergibt.

Bei den Anzündhilfen des Standes der Technik, die z.B. durch Verseilen hergestellt wurden, bildet sich eine Spirale von Fasern, die der Verseilrichtung folgt. Derartige Anzündhilfen müssen vor dem Gebrauch entgegen der Spiraldrehrichtung aufgedreht werden, damit ein sicheres Anzünden erfolgen kann. Eine solche Manipulation ist zum einen aufwendig sowie zum anderen unangenehm, da im Formkörper befindliche und von diesem aufgenommene Brennstoffe, wie z.B. Paraffinbestandteile, sich lösen und unter Umständen an der Hand des Benutzers verbleiben.

Die Erfindung soll nachstehend anhand eines Ausführungsbeispiels sowie einer Figur näher erläutert werden.

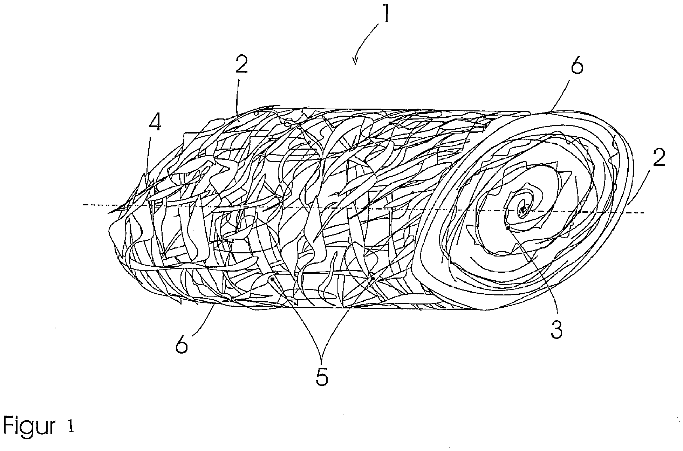

Die Figur zeigt hierbei eine perspektivische Darstellung eines Holzfaser-Formkörpers mit Schrägschnitt.

Wie aus der Figur ersichtlich, sind bei dem dortigen Formkörper 1 sowohl die Grund- als auch die Deckfläche, d.h. beide Zylinderseitenflächen, als Schrägschnittflächen 2 ausgebildet.

Der insbesondere Zylinderkörper weist darüber hinaus eine mehrlagige Wickel- oder Rollstruktur 3 auf, wobei die Schichtenfolge radial beabstandet um die Zylinderlängsachse 4, jedoch nicht als Seilspirale verläuft.

Jede Lage der Schichtenfolge weist wirr orientierte Holzfasern 5 auf, so dass die Einzellagen untereinander durch die Wirrstruktur quasi in Formschluss stehen, so dass eine Haftverbindung die Folge ist.

Der Schrägschnittwinkel liegt bevorzugt im Bereich zwischen 30° und 60° bezüglich der Längsachse 4, wobei entscheidend ist, dass mindestens ein spitz zulaufender Abschnitt 6 geschaffen ist, der die bevorzugte Anzündstelle darstellt.

Insbesondere der Bereich 6 kann mit einem zusätzlichen Zündmittel versehen werden, um den Anzündvorgang nochmals zu erleichtern.

Dadurch, dass der zusätzliche Brennstoff, z.B. Paraffin, während des erfindungsgemäßen Walzen-Pressvorgangs zuführbar ist, besteht die Möglichkeit, die Verteilung des zusätzlichen Brennstoffs innerhalb des entstehenden Zylinderkörpers zu steuern bzw. vorzugeben. So kann erreicht werden, dass sich besonders viel Brennstoff im Zylinderkern oder aber auch außenseitig befindet. Die Gefahr eines unerwünschten Verflüchtigens entsprechender Komponenten des Brennstoffs ist durch die umgebenden Lagen aus Holzwollfasern bereits reduziert. Eine Einzelverpackung der Holzwolle-Formkörper kann daher entfallen.

Die erfindungsgemäß hergestellten Formkörper sind aufgrund des gewählten Pressverfahrens wesentlich gleichmäßiger in ihrer äußeren Gestalt. Darüber hinaus ist die Materialdichte und die Querschnittsfläche beeinflussbar.

Es sei noch darauf aufmerksam gemacht, dass mit Blick auf das im Ausführungsbeispiel erwähnte Form-Presswalz-Verfahren sich eine bevorzugte Zylinderform des Körpers ergibt. Es sind jedoch auch alternative Pressverfahren einsetzbar, die zu einer von der kreisrunden Form abweichenden Gestalt führen, ohne den Grundgedanken der Erfindung zu verlassen.

## Patentansprüche

1. Holzfaser-Formkörper (1) als Zündhilfe mit zusätzlichem, durch Tauchen oder Tränken bewirkten Brennstoffgehalt, wobei eine Vielzahl von Holzfasern kompaktiert den Formkörper bildet und dieser eine Grund- und Deckfläche aufweist,
**dadurch gekennzeichnet, dass**
mindestens die Grund- oder Deckfläche als Schrägschnitt (2) ausgebildet ist und der Formkörper (1) eine mehrlagige, Wickel- oder Rollstruktur (3) aufweist, welche eine Schichtenfolge umfasst, die radial beabstandet um die Formkörperlängsachse verläuft und jede Lage der Schichtenfolge wirr orientierte Holzfasern (5) besitzt, so dass die Einzellagen untereinander in einer durch einen Formschluss infolge der Wirrstruktur der Holzfasern entstehenden Haftverbindung stehen.

2. Formkörper nach Anspruch 1,
**dadurch gekennzeichnet, dass**
der Radius der spiralähnlichen Schichtenfolge vom Formkörperkern nach außen, zum Formkörpermantel hin, stetig zunimmt.

3. Formkörper nach einem der vorangegangenen Ansprüche,
**dadurch gekennzeichnet, dass**
der Formkörper (1) eine Zylinder-Gestalt aufweist, wobei mindestens die Grund- oder Deckfläche des Zylinderkörpers als Schrägschnitt ausgebildet ist.

4. Formkörper nach Anspruch 3,
**dadurch gekennzeichnet, dass**
der Schrägschnittwinkel bezogen auf die Zylinderlängsachse im Bereich zwischen 30° und 60°, bevorzugt zwischen 35° und 55° liegt.

5. Formkörper nach Anspruch 3 oder 4
**dadurch gekennzeichnet, dass**
die Schrägschnittfläche mit einem Zündmittel versehen ist.

6. Formkörper nach einem der Ansprüche 3 bis 5,
**dadurch gekennzeichnet, dass**
sowohl die Grund- als auch die Deckfläche des Zylinderkörpers als Schrägschnittfläche ausgebildet ist.

7. Formkörper nach einem der vorangegangenen Ansprüche,
**dadurch gekennzeichnet, dass**
die Holzfasern eine Breite von im Wesentlichen 0,5 mm bis 3,5 mm, bevorzugt 1,5 mm bis 3,0 mm aufweisen.

8. Formkörper nach einem der vorangegangenen Ansprüche,
**dadurch gekennzeichnet, dass**
die Verteilung des zusätzlichen Brennstoffs vom Formkörperkern zum Formkörpermantel hin zunimmt.

9. Verfahren zur Herstellung eines Holzfaser-Formkörper (1) als Zündhilfe,
**gekennzeichnet durch**
mit den Verfahrensschritten
Aufgeben einer vorgegebene Menge von Holzwollfasern in einen Walzenspalt einer Form-Presswalz-Vorrichtung aus Form-Presswalzen,
Ausführen einer zueinander gerichteten Rotationsbewegung der Form-Presswalzen, wobei die Holzwollfasermenge in den Walzenspalt eingezogen und dort verdichtet wird, wobei
sich durch die Ausführung der Walzenanordnung eine Wickel- bzw. Rolllagenstruktur des Formkörpers ergibt, wobei über eine Zufuhr eines Brennstoffs während des Pressvorgangs die Verteilung des Brennstoffs innerhalb des entstehenden Zylinderkörpers steuerbar ist.

## Claims

1. A wood fiber form element (1) configured as an ignition aid, comprising: an additional fuel content imparted by dipping or drenching, wherein a plurality of wood fibers is compressed to form the wood fiber form element which includes a base surface and a cover surface,
**characterized in that**
at least one of the base surface or cover surface is configured as a slanted cut (2) and the wood fiber form element (1) includes a multi-layer wound or rolled structure (3) which includes a layer sequence which extends with a radial offset about the wood fiber form element longitudinal axis and each layer of the layer sequence includes random oriented wood fibers (5) so that individual layers are form locked amongst each other due to adhesion caused by the random structure of the wood fibers.

2. The wood fiber form element (1) according to claim 1,
**characterized in that**
a radius of the spiral shaped layer sequence continuously increases from a wood fiber form element core in outward direction towards a wood fiber form element enveloping surface.

3. The wood fiber form element (1) according to one of the preceding claims,
**characterized in that**
the wood fiber form element (1) has a cylindrical shape, wherein at least the base surface or the cover surface of the cylindrical element is configured as a slanted cut.

4. The wood fiber form element (1) according to claim 3,
**characterized in that**
the slant cut angle is in a range of 30° to 60°, advantageously between 35° to 55° with reference to the longitudinal cylinder axis.

5. The wood fiber form element (1) according to claim 3 or 4,
**characterized in that**
the slanted cut surface is provided with an ignition device.

6. The wood fiber form element (1) according to one of the preceding claims,
**characterized in that**
the base surface as well as the cover surface of the cylindrical element is configured as a slanted cut surface.

7. The wood fiber form element (1) according to one of the preceding claims,
**characterized in that**
the wood fibers have a width of essentially 0.5 mm to 3 mm, advantageously 1.5 mm to 3.0 mm.

8. The wood fiber form element (1) according to one of the preceding claims,
**characterized in that**
a distribution of additional fuel increases from the wood fiber form element core to the wood fiber form enveloping surface.

9. The method for producing a wood fiber form element (1) configured as an ignition aid, the method comprising the steps:
applying a predetermined amount of wood wool fibers into a roller gap of a shape press rolling device including shape press rollers,
performing a rotation of the form press rollers towards each other, wherein the wood wool fiber amount is drawn into the roller gap and compressed,
wherein the roller arrangement yields a wound or rolled layer structure of the wood fiber form element (page 4, paragraph 4),
wherein a distribution of the fuel within the cylinder element that is being produced is controllable by an amount of fuel that is added during the pressing process (page 5, paragraph 6).

## Revendications

1. Corps moulé (1) en fibres de bois à titre d'aide à l'allumage, ayant une teneur en combustible supplémentaire engendrée par immersion ou imprégnation, dans lequel une multitude de fibres de bois constituent le corps moulé en étant compactées et celui-ci présente une surface de base et une surface de couverture,
**caractérisé en ce que**
au moins la surface de base ou la surface de couverture est réalisée sous forme de coupe oblique (2) et le corps moulé (1) présente une structure multicouche bobinée ou enroulée (3) qui comprend une succession de couches qui s'étend à distance radiale autour de l'axe longitudinal du corps moulé, et chaque couche de la succession de couches possède des fibres de bois (5) orientées au hasard, de sorte que les couches individuelles sont en liaison adhésive les unes avec les autres résultant par une coopération de formes due à la structure orientée au hasard des fibres de bois.

2. Corps moulé selon la revendication 1,
**caractérisé en ce que**
le rayon de la succession de couches similaire à une spirale augmente en continu depuis le coeur du corps moulé vers l'extérieur vers l'enveloppe du corps moulé.

3. Corps moulé selon l'une des revendications précédentes,
**caractérisé en ce que**
le corps moulé (1) présente une forme cylindrique, au moins la surface de base ou la surface de couverture du corps cylindrique étant réalisée sous forme de coupe oblique.

4. Corps moulé selon la revendication 3,
**caractérisé en ce que**
l'angle de la coupe oblique est dans la plage comprise entre 30° et 60°, de préférence entre 35° et 55°, par rapport à l'axe longitudinal du cylindre.

5. Corps moulé selon la revendication 3 ou 4,
**caractérisé en ce que**
la surface de la coupe oblique est pourvue d'un agent d'allumage.

6. Corps moulé selon l'une des revendications 3 à 5,
**caractérisé en ce que**
aussi bien la surface de base que la surface de couverture du corps cylindrique sont réalisées sous forme de coupe oblique.

7. Corps moulé selon l'une des revendications précédentes,
**caractérisé en ce que**
les fibres de bois présentent une largeur sensiblement de 0,5 mm à 3,5 mm, de préférence de 1,5 mm à 3,0 mm.

8. Corps moulé selon l'une des revendications précédentes,
**caractérisé en ce que**
la répartition du combustible supplémentaire augmente depuis le coeur du corps moulé vers l'enveloppe du corps moulé.

9. Procédé de production d'un corps moulé (1) en fibres de bois comme aide à l'allumage,
**caractérisé par** les étapes consistant à
introduire une quantité donnée de fibres de laine de bois dans une emprise d'un dispositif de moulage à rouleaux presseurs constitué par des rouleaux presseurs de moulage,
effectuer des mouvements de rotation dirigés l'un vers l'autre des rouleaux presseurs de moulage, la quantité de fibres de laine de bois étant tirée dans l'emprise et compactée dans celle-ci,
dans lequel
grâce à la réalisation de l'agencement des rouleaux, il se produit une structure de couches bobinées ou enroulées du corps moulé, et
par apport d'un combustible pendant l'opération de pressage, on peut commander la répartition du combustible à l'intérieur du corps cylindrique en train de se former.
